# EUROPEAN PATENT SPECIFICATION

(11) **EP 2 002 174 B1**
(45) Date of publication and mention of the grant of the patent: **03.10.2012**
(21) Application number: 07719344.9
(22) Date of filing: 25.01.2007
(51) Int. Cl.: F21L 4/08, F21L 13/06, H02J 7/00, H02K 35/02

(54) **MANUALLY RECHARGEABLE FLASH LIGHT**
MANUELL WIEDERAUFLADBARE TASCHENLAMPE
LAMPE DE POCHE RECHARGEABLE MANUELLEMENT

(30) Priority: 25.01.2006 CA 2534674
(43) Date of publication of application: 17.12.2008
(73) Proprietor: Grand, Gérard, St. Catherines ON L2T 3N3 (CA)
(72) Inventor: GUANG, Yiu Cheuk, Hong Kong (HK); BEAUCHAMP, Fern, St. Catharines, Ontario L2P 2S3 (CA)
(74) Representative: Stürken, Joachim
(86) International application number: PCT/CA2007/000092
(87) International publication number: WO 2007/085078

(56) References cited:
- KR-A- 20030 002 854
- US-A- 4 315 301
- US-A- 5 975 714
- US-A1- 2003 184 997
- US-B2- 6 729 744

## Description

### FIELD OF THE INVENTION

The present invention relates to manually rechargeable flashlights and more particularly to manually rechargeable flashlights that use capacitors to store electrical energy.

### BACKGROUND OF THE INVENTION

A variety of manually rechargeable flashlights that use the mechanical motion of a permanent magnet with respect to a coil to generate electricity for recharging such flashlights, are well known. In one such type of prior art manually rechargeable flashlight, a permanent magnet is movable with respect to a coil to generate an alternating electrical current in the coil. The alternating electrical current is passed through a rectifier and the direct current from the rectifier is used to charge capacitors that power one or more light emitting diodes.

Tt has been found, however, that virtually all of such known prior art flashligts are very inefficient in terms of the amount of mechanical movement required in order to sufficiently charge the capacitors. Presently, known prior art mechanically rechargeable flashlights require a great deal of mechanical movement, much more than is desirable, to charge their capacitors. Moreover, the amount of electrical energy in the capacitors provides is sufficient to brightly light the light emitting diode(s) for only a short period of time and then partially lights the light emitting diode(s) for a subsequent short period of time.

Two such prior art manually rechargeable flashlights are described below.

United States Patent No. 5,975,714 issued November 2, 1999 to Vetorino et al discloses a Renewable Energy Flashlight that comprises a housing and a barrel located in the housing, with a wire coil disposed between the barrel and the housing. A magnet in the barrel oscillates back and forth along the barrel when the flashlight is shaken, thus generating an alternating current in the coil. Two springs disposed one at each end of the barrel cause the movable magnet to recoil when the magnet strikes either spring. The coil is electrically connected to an electronic circuit including a rectifier and a capacitor. A light emitting diode (LED) is connected to the capacitor through a switch. The LED is illuminated when the switch is switched on.

United States Patent No. 6,220,719 issued April 24, 2001 to Vetorino et al discloses a Renewable Energy Flashlight that comprises a housing and a barrel located in the housing, with a wire coil disposed between the barrel and the housing. A magnet in the barrel oscillates back and forth along the barrel when the flashlight is shaken, thus generating an alternating current in the coil. Two magnets disposed one at each end of the barrel cause the movable magnet to recoil when the magnet strikes either spring. The coil is electrically connected to an electronic circuit including a rectifier and a capacitor. A light emitting diode (LED) is connected to the capacitor through a switch. The LED is illuminated when the switch is switched on.

It has been found that the above two prior art flashlights are somewhat inefficient at generating and storing electricity for illuminating the light emitting diode. The flashlight must be shaken many times for a charge to be stored that illuminates the light emitting diode for a few minutes, or in other words, the flashlight must be shaken for an unacceptable long period of time to fully charge the capacitors. At least a couple of factors contribute to this. First, the entire mass of the flashlight must be shaken or otherwise oscillated in order to move the permanent magnet with respect to the coil. Secondly, it can be difficult to maintain a synchronized rhythm of shaking, thus leading to less than optimal movement of the permanent magnet with respect to the shaking of the flashlight.

It is an object of the present invention to provide a manually rechargeable flashlight that is efficient in terms of the mechanical motion required to provide a substantial and sufficient electrical charge for the flashlight.

### SUMMARY OF THE INVENTION

In accordance with one aspect of the present invention there is disclosed a novel manually rechargeable flashlight comprising a main housing defining a longitudinal axis "L". An external magnet control member is disposed circumferentially around the main housing for free sliding movement along the longitudinal axis "L" between a forward position and a rearward position. The external magnet control member has at least one bar magnet oriented longitudinally in parallel with the longitudinal axis "L". There is at least one light emitting diode. There is also a storage means for storing electrical energy and supplying the electrical energy to the at least one light emitting diode. A switch means is for turning on and off the least one light emitting diode. An elongate tube is disposed within the main housing. A coil of electrically conductive wire is disposed around the main housing, and electrically connected to the storage means. A permanent magnet is disposed in free-sliding relation in the elongate tube so as to move within the interior of the coil, and is oriented with its north pole in the opposite direction along the longitudinal axis "L" as the has at least one bar magnet in the external magnet control member. When the external magnet control member is moved along the longitudinal axis "L" between the forward position and a rearward position, the permanent magnet is moved along the longitudinal axis "L" generally with the external magnet control member.

In accordance with another aspect of the present invention there is disclosed a novel manually rechargeable flashlight comprising a main housing defining a longitudinal axis "L". An external magnet control member is disposed circumferentially around the main housing for free sliding movement along the longitudinal axis "L"' between a forward position and a rearward position. The external magnet control member has at least one bar magnet oriented longitudinally in parallel with the longitudinal axis "L". There is at least one light emitting diode. There is also a storage means for storing electrical energy and supplying the electrical energy to the at least one light emitting diode. A switch means is for turning on and off the least one light emitting diode. An elongate tube is disposed within the main housing. A coil of electrically conductive wire is disposed around the main housing, and electrically connected to the storage means. A permanent magnet is disposed in free-sliding relation in the elongate tube so as to move within the interior of the coil, and is oriented with its north pole in the same direction along the longitudinal axis "L" as the has at least one bar magnet in the external magnet control member. When the external magnet control member is moved along the longitudinal axis "L" between the forward position and a rearward position, the permanent magnet is moved along the longitudinal axis "L" in an opposite direction to the external magnet control member.

In accordance with yet another aspect of the present invention there is disclosed a novel manually rechargeable flashlight comprising a main housing defining a longitudinal axis "L". An external magnet control member is mounted on the main housing for movement between a neutral position and a repelling position. The external magnet control member comprises at least one bar magnet oriented longitudinally in parallel with the longitudinal axis "L". There is at least one light emitting diode. There is also a storage means for storing electrical energy and supplying the electrical energy to the at least one light emitting diode. A switch means for turning on and off the least one light emitting diode. An elongate tube is disposed within the main housing. A coil of electrically conductive wire is disposed around the main housing, and electrically connected to the storage means. A permanent magnet is disposed in free-sliding relation in the elongate tube so as to move within the interior of the coil. When the external magnet control member is in its neutral position, the permanent magnet is close to the external magnet control member. When the external magnet control member is in its repelling position, the permanent magnet is repelled away from the external magnet control member.

Other advantages, features and characteristics of the present invention, as well as methods of operation and functions of the related elements of the structure, and the combination of parts and economies of manufacture, will become more apparent upon consideration of the following detailed description and the appended claims with reference to the accompanying drawings, the latter of which is briefly described herein below.

### BRIEF DESCRIPTION OF THE DRAWINGS

The novel features which are believed to be characteristic of the manually rechargeable flashlight according to the present invention, as to its structure, organization, and use, together with further objectives and advantages thereof, will be better understood from the following drawings in which a presently preferred embodiment of the invention will now be illustrated by way of example. It is expressly understood, however, that the drawings are for the purpose of illustration and description only, and are not intended as a definition of the limits of the invention. In the accompanying drawings:

**Figure** 1 is a side elevational view of the first preferred embodiment of the manually rechargeable flashlight according to the present invention, with the manually operable external magnet control member in a central position;

**Figure 2** is a side elevational view similar to Figure 1, but with the manually operable external magnet control member in a forward position;

**Figure 3** is a side elevational view similar to Figure 1, but with the manually operable external magnet control member in a rearward position;

**Figure 4** is an end elevational view of the manually rechargeable flashlight of Figure 1;

**Figure 5** is a sectional side elevational view of the manually rechargeable flashlight of Figure 1, taken along section line 5 - 5 of Figure 1, with the manually operable external magnet control member in a central position;

**Figure 6** is a sectional side elevational view similar to Figure 5, but also showing the magnetic lines of flux;

**Figure 7** is a sectional side view elevational similar to Figure 5, but with the manually operable external magnet control member in a forward position;

**Figure 8** is a sectional side elevational view similar to Figure 7, but with the manually operable external magnet control member in an extended forward position;

**Figure 9** is a sectional side elevational view similar to Figure 8, but with the manually operable external magnet control member in a rearward position;

**Figure 10** is a sectional side elevational view similar to Figure 9, but with the manually operable external magnet control member in an extended rearward position;

**Figure 11** is a block diagram schematic of the first preferred embodiment manually rechargeable flashlight of Figure 1, specifically showing the charging circuit;

**Figure 12** is a side elevational view of the second preferred embodiment of the manually rechargeable flashlight according to the present invention, with the manually operable external magnet control member in a rearward position;

**Figure 13** is a side elevational view of the second preferred embodiment of Figure 12, with the manually operable external magnet control member in a forward position;

**Figure 14** is a perspective view of the third preferred embodiment of the manually rechargeable flashlight according to the present invention;

**Figure 15** is an enlarged perspective view of the third preferred embodiment of Figure 14;

**Figure 16** is a sectional side elevational view of the fourth preferred embodiment of the manually rechargeable flashlight according to the present invention, with the external magnet control member in a neutral position; and,

**Figure 17** is a sectional side elevational view of the fourth preferred embodiment of the manually rechargeable flashlight of Figure 16, but with the external magnet control member in a repelling position.

Advantages, features and characteristics of the present invention, as well as functions of the related elements of the structure, and the combination of parts and economies of manufacture, will become more apparent upon consideration of the following detailed description with reference to the accompanying drawings.

### DETAILED DESCRIPTION OF THE PREFERRED EMBODIMENTS

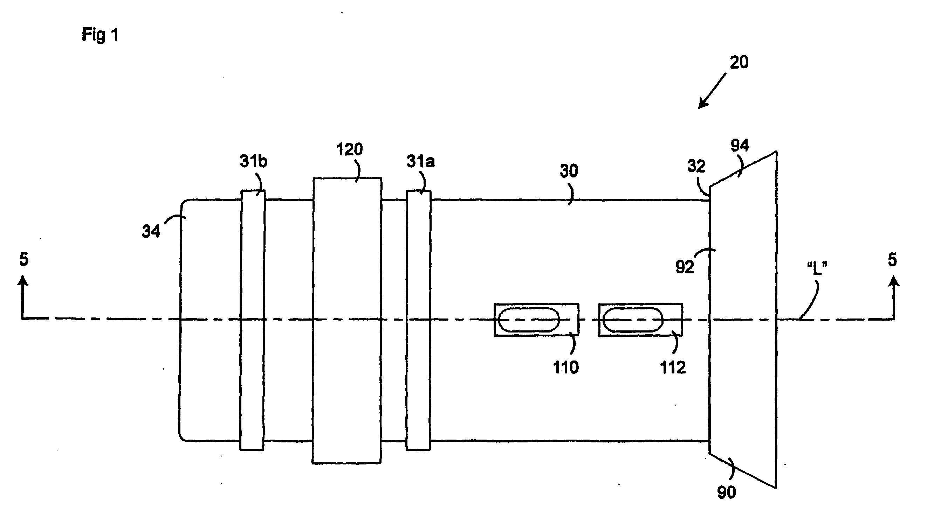

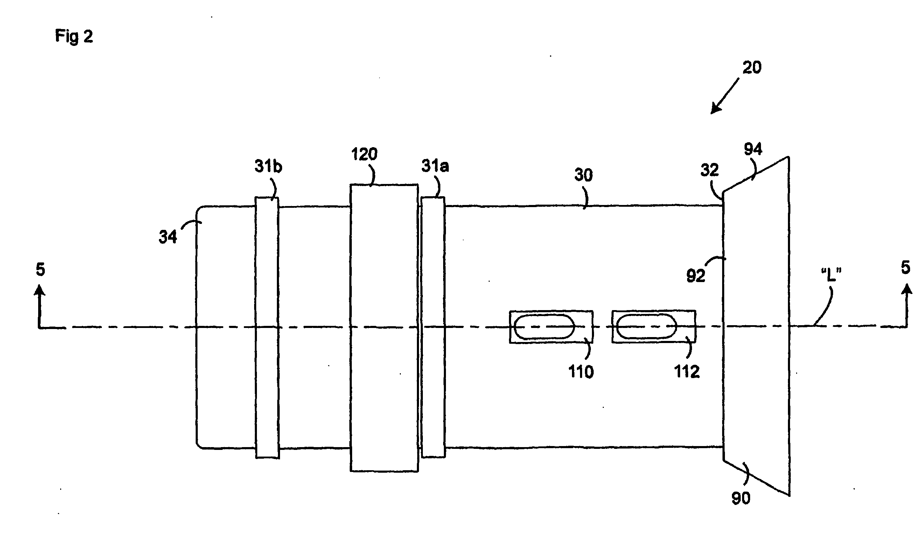

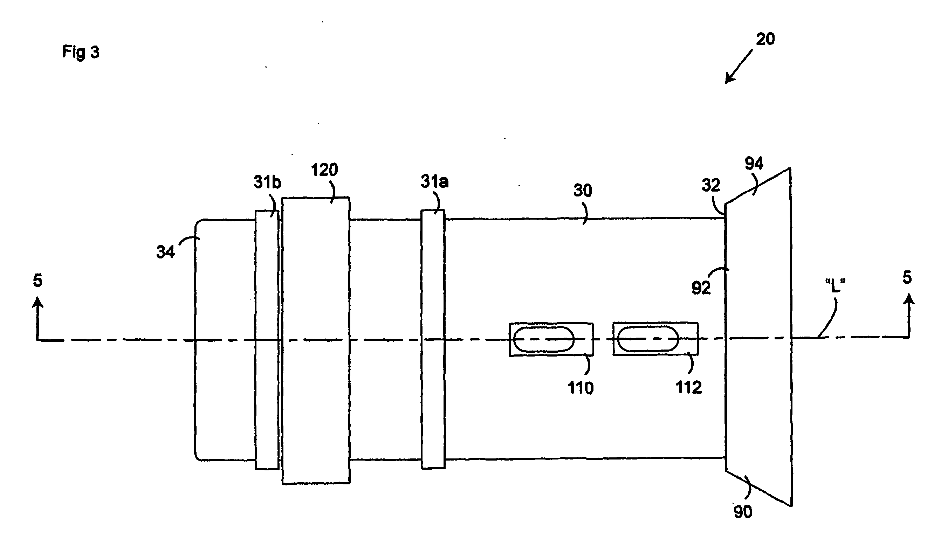

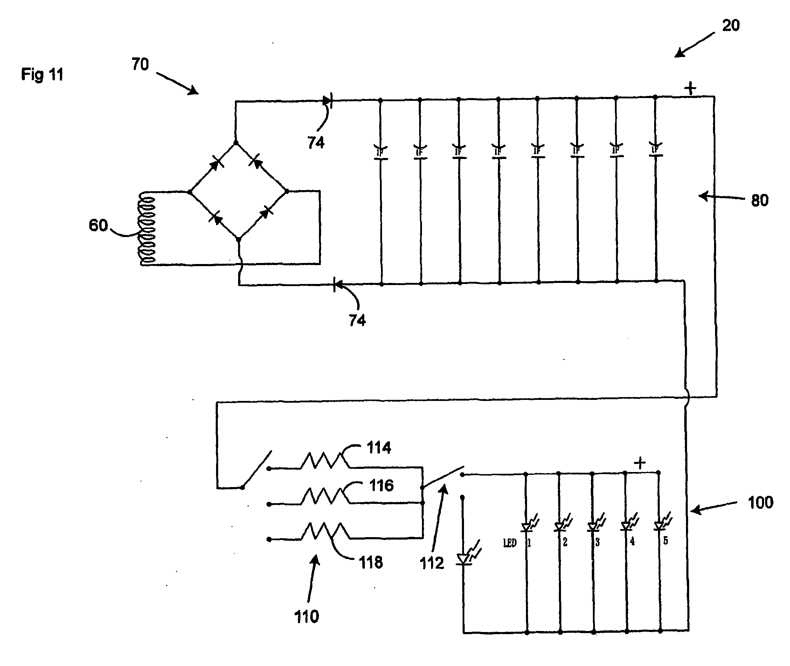

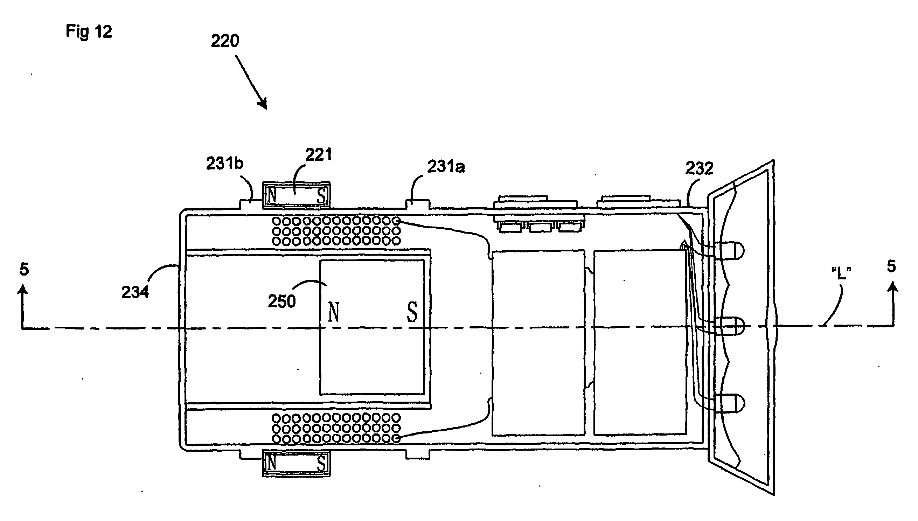

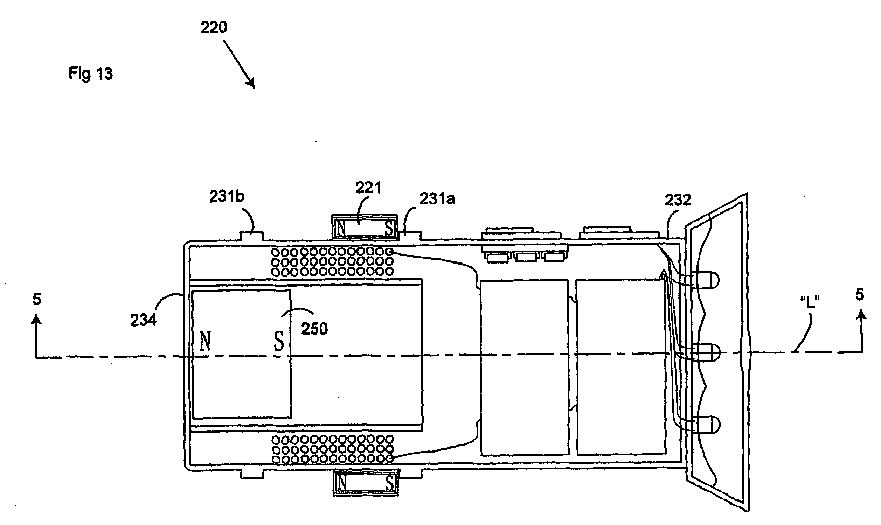

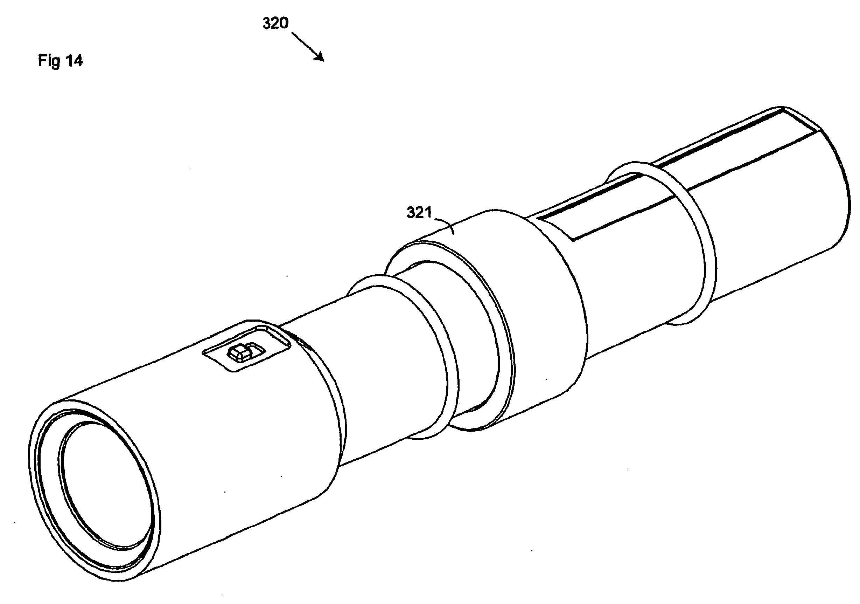

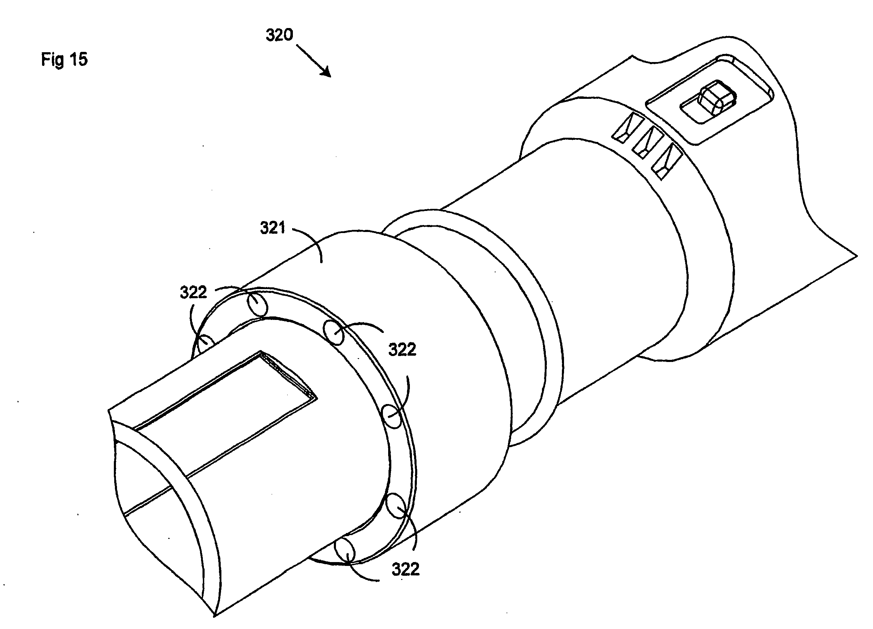

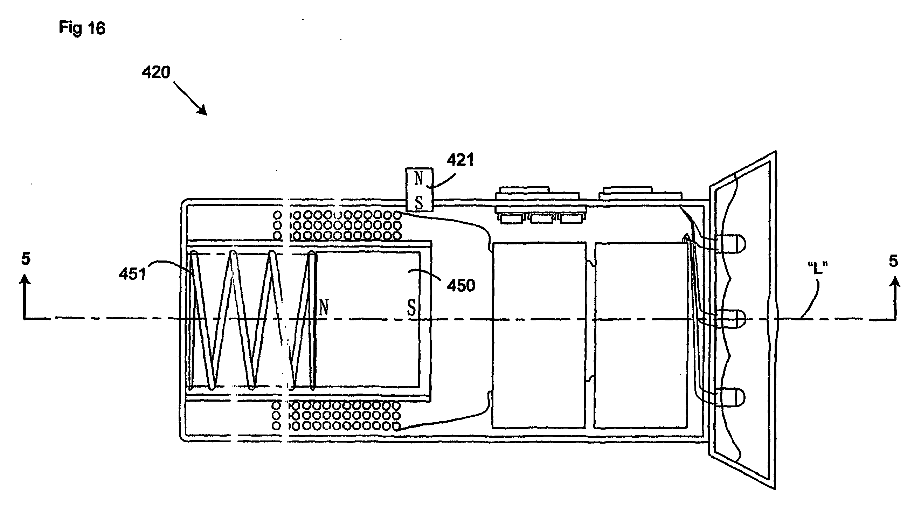

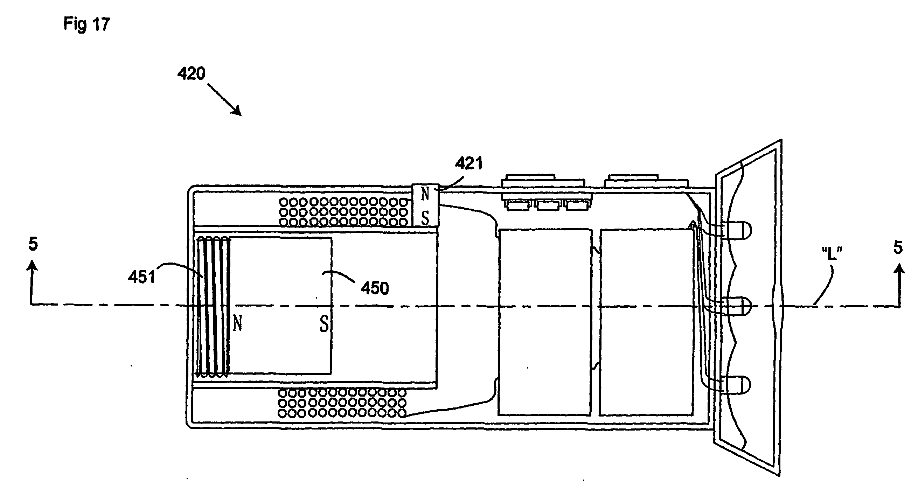

Referring to Figures 1 through 17 of the drawings, it will be noted that Figures 1 through 11 illustrate a preferred embodiment of the manually rechargeable flashlight according to the present invention, Figures 12 and 13 illustrate a second preferred embodiment of the manually rechargeable flashlight according to the present invention, Figures 14 and 15 illustrate a third preferred embodiment of the manually rechargeable flashlight according to the present invention, and Figures 16 and 17 illustrate a fourth preferred embodiment of the manually rechargeable flashlight according to the present invention.

Reference will now be made to Figures 1 through 11, which show the preferred embodiment of the manually rechargeable flashlight according to the present invention, as indicated by the general reference numeral 20. The manually rechargeable flashlight 20 comprises a main housing 30 preferably made from plastic and shaped and dimensioned to the properly grip by moat human hands. The main housing 30 has a front end 32 and a back end 34 is preferably cylindrical in shape and defines longitudinal axis "L", and has a diameter of about two inches and a length of perhaps about five inches. The exact size and shape of the main housing 30 is not germane to the present invention, although most of the components of the manually rechargeable flashlight 20 according to the present invention must fit properly inside the main housing 30.

Disposed within the main housing 30 is an elongate tube 40, a free-sliding permanent magnet 50 disposed within the elongate tube 40, a coil 60 of electrically conductive wire wrapped around the center portion of the elongate tube 40, a rectifier 70 that is powered by the coil 60, and a plurality of capacitors 80 that are charged by the rectifier 70. The electrical energy stored in the capacitors 80 are used to illuminate a plurality of light emitting diodes 100.

An external magnet control member comprising a magnet control ring 120 is disposed circumferentially around a central portion of the main housing 30 for free sliding movement between a forward stop ring 31a and a rearward stop ring 31b that are integrally formed on the main housing 30. The magnet control ring 120 has two bar magnets 122,124 (preferably also rare earth magnets) oriented longitudinally in parallel with the longitudinal axis "L". The north end of each of the bar magnets 122,124 is oriented towards the back end 34 of the main housing 30 while the south end of each of the bar magnets 122,124 is oriented towards the front end 32 of the main housing 30.

At the front end 32 of the main housing 30 is a reflector housing 90 that houses the plurality of light emitting diodes 100 (LEDs), specifically a central light emitting diode 102 and five peripheral light emitting diodes 104. The reflector housing 90 has a back wall portion 92 that is mounted on the front end 32 of the main housing 30, a sloped peripheral wall portion 94 extending outwardly from the back wall portion 92, and a clear plastic or glass lens 96 that is generally flat and of substantially constant thickness, but with a central focusing lens portion 98 therein. The central focusing lens portion 98 is used to focus the light from the central light emitting diode 102 onto a relatively small area. A reflector 99 having six appropriately located paraboloid shapes for reflecting light forwardly from the light emitting diodes 100 is disposed within the reflector housing 90 just ahead of the back wall portion 92.

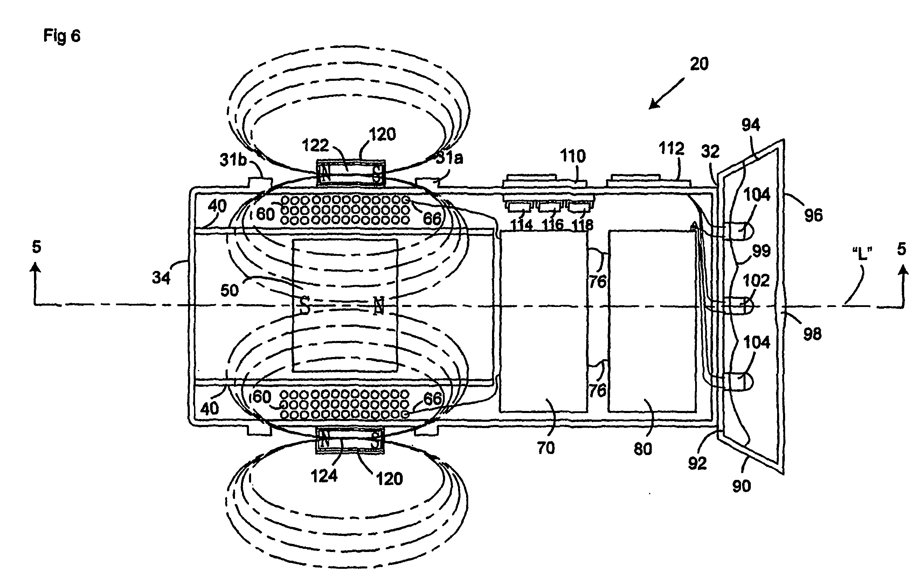

The elongate tube 40 is close-ended and is secured to the back end 34 of the main housing 30 so as to be oriented generally along the longitudinal axis "L". The permanent magnet 50 is disposed in free-sliding relation in the elongate tube 40, so as to move within the interior of the coil 60. Preferably, a rear-earth type magnet in order to maximize the magnetic flux passing through the coil 60. The north end of the permanent magnet 50 is oriented towards the front end 32 of the main housing 30 while the south end of the permanent magnet 50 is oriented towards the back end 34 of the main housing 30. In this manner, the permanent magnet 50 is oriented oppositely to the bar magnets 122, 124. In this manner, the magnetic lines of flux are completed in regular loops (as can be seen in Figure 6) when the permanent magnet 50 is in a generally central position in the elongate tube 40. The permanent magnet 50 is therefore essentially carried by the bar magnets 122,124. As the magnet control ring 120 (containing the bar magnets 122, 124) is moved along the longitudinal axis "L", the permanent magnet 50 is magnetically drawn by the bar magnets 122,124. Accordingly, the permanent magnet 50 follows the movement of the magnet control ring 120, as will be discussed in greater detail subsequently.

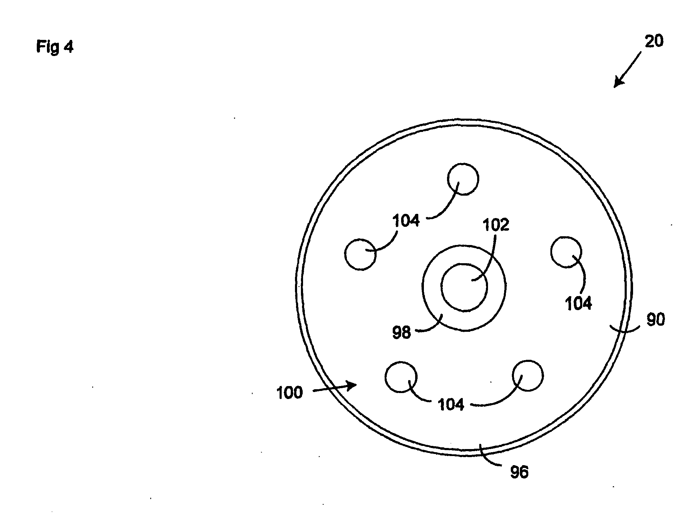

The electrical output of the generator 60 is connected via wires 66 to the bridge rectifier 70 that is also mounted within the housing. The bridge rectifier 70 as shown in the schematic (Figure 4) is a conventional bridge rectifier 70 comprising four diodes 72. Further, two additional diodes 74 are used to filter out spike voltages. The rectifier 70 is electrically connected via wires 76 to the bank of eight capacitors 80 connected together in parallel. It has been found that tantalum type capacitors 80 having a capacity of 1.0 farad at 5.5 VDC are suitable and store a suitable amount of electrical power for powering the various light emitting diodes 100. Alternatively, if a higher voltage is required, the eight capacitors 80 can also be arranged in four pairs, with the capacitors 80 in each pair connected together in series one with the other, and with the four groups connected together in parallel.

The light emitting diodes 100 are connected in parallel with the capacitor bank 80 with an intensity switch 110 (single-pole triple-throw switch) that is used to select either a high intensity setting through a 20 ohm resistor 114, a medium intensity setting through a 200 ohm resistor 116, or a low intensity setting through a 470 ohm resistor 118. These resistor values have been found to be useful, but other resistor values may also be readily suitable. A mode switch 112 (single-pole double-throw switch) is connected in series with the intensity switch 110 and is used to choose either the central light emitting diode 102 or the five peripheral light emitting diodes 104. In the event that the central light emitting diode 102 is chosen, it will illuminate a smaller area and will also drain the capacitor bank at a level one-fifth of that as the five peripheral light emitting diodes 104.

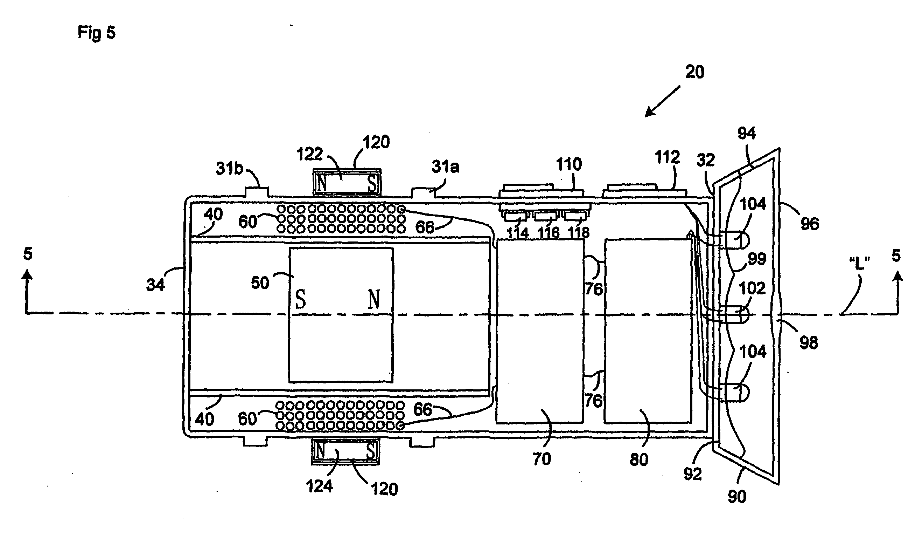

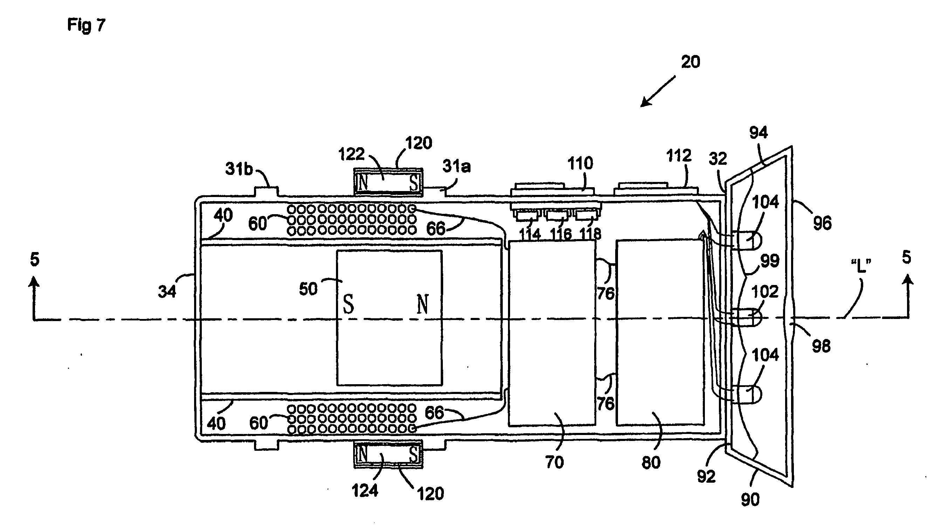

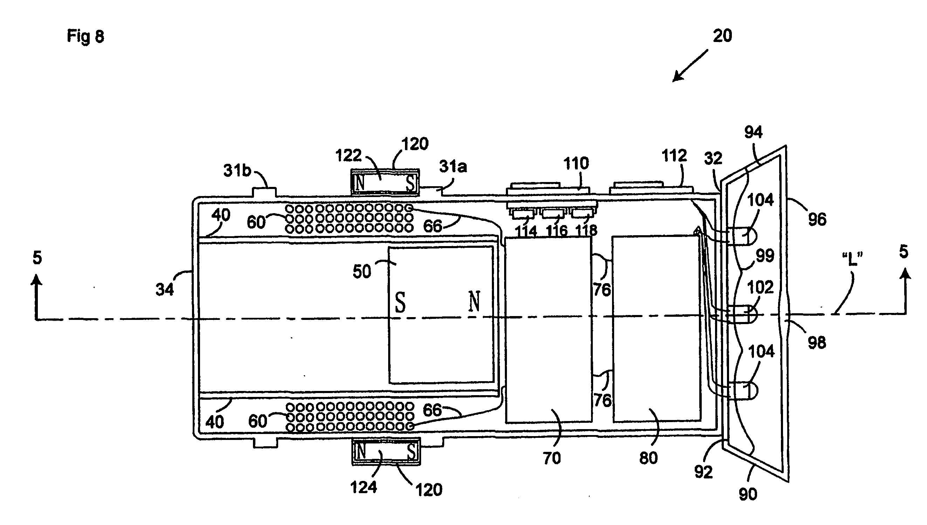

Reference will now be made to Figures 5 through 10, which show the manually rechargeable flashlight 20 in use. In Figure 5, the magnet control ring 120 is in a central position between the forward stop ring 31a and the rearward stop ring 31b on the main housing 30. In Figure 7, the magnet control ring 120 has been moved forwardly to a forward position whereat it abuts against the forward stop ring 31a. The permanent magnet 50 is also moved forwardly due to the influence of the magnetic flux from the bar magnets 122,124. As can be seen in Figure 8, the permanent magnet 50 travels beyond its position in Figure 7, due to the momentum of the permanent magnet 50. The faster the magnet control ring 120 is moved, the faster the permanent magnet 50 is traveling when it reaches the forward position as shown in Figure 7, thus the more momentum it has and the farther it travels to its extended forward position.

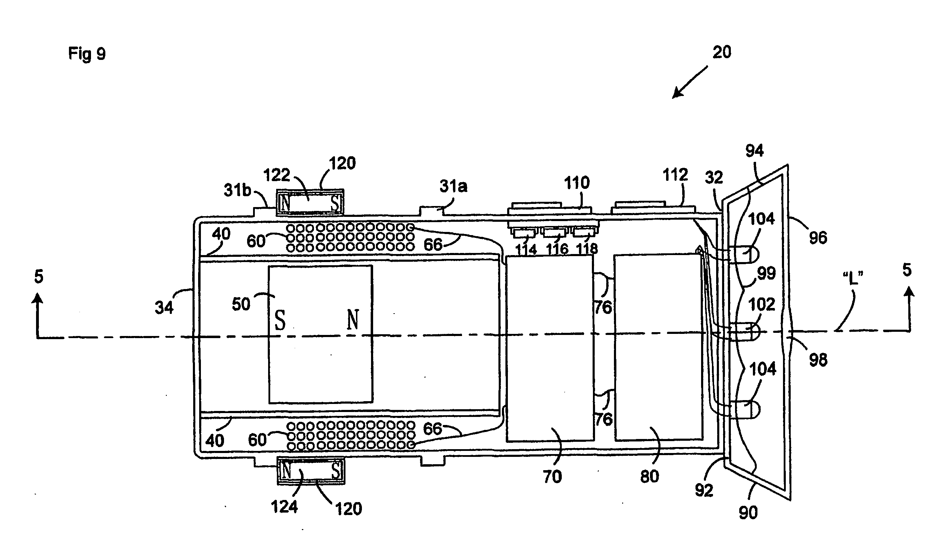

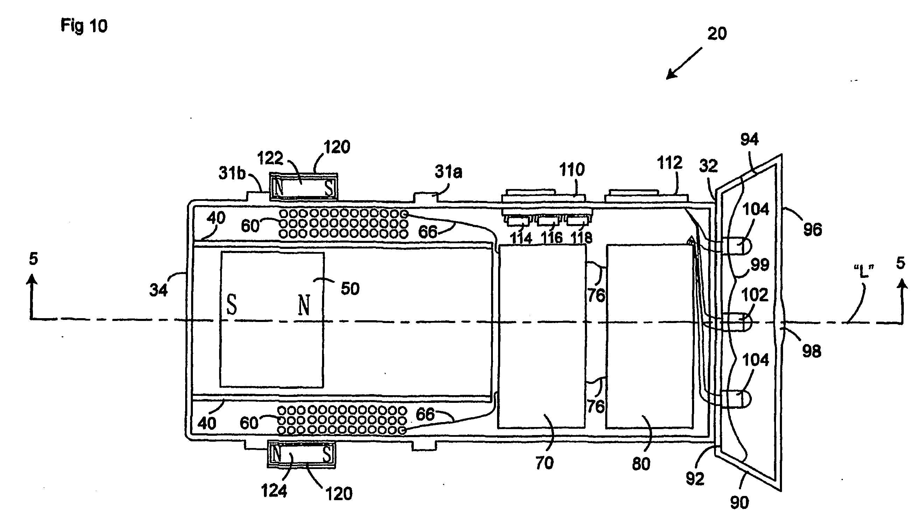

The magnet control ring 120 is then moved rearwardly through its central position to a rearward position as is shown in Figure 9, whereat it abuts against the rearward stop ring 31b. The permanent magnet 50 is also moved rearwardly due to the influence of the magnetic flux from the bar magnets 122,124. As can be seen in Figure 10, the permanent magnet 50 travels beyond its position in Figure 9, due to the momentum of the permanent magnet 50, to its extended rearward position.

The magnet control ring 120 is then moved back to its central position. This overall movement pattern is repeated so as to define an oscillatory motion of the magnet control ring 120 and to thereby cause an extended oscillatory motion of the permanent magnet 50. As can be seen in Figures 5 through 10, the motion of the permanent magnet 50 with respect to the coil 60 causes electricity to be generated by the coil 60. Moreover, due to the extended oscillatory motion of the permanent magnet 50, as described above, as caused by the movement of the magnet control ring 120, a sufficient amount of electricity to charge the capacitors 80 in the capacitor bank is generated quite readily with only a minor amount of mechanical effort.

In an alternative embodiment of the manually rechargeable flashlight of the present invention, it is contemplated that the magnet control ring 120 could be replaced by a cylindrical outer casing that slides longitudinally along the main housing between a forward position and a rearward position.

Reference will now be made to Figures 12 and 13, which show a second preferred embodiment of the manually rechargeable flashlight of the present invention, as indicated by general reference numeral 220. The manually rechargeable flashlight 220 is similar to the first preferred embodiment manually rechargeable flashlight 20, except that the permanent magnet 250 is oriented in the opposite direction of the permanent magnet 50 in the first preferred embodiment. Accordingly, the north pole of the permanent magnet 250 faces the back end 234 of the main housing 230 and the south pole of the permanent magnet 250 faces the front end 232 of the main housing 230. In use, when the external magnet control member, which more specifically comprises a magnet control ring, is moved rearwardly, as shown in Figure 12, the north and south poles of the magnet control ring 221 repel the north and south poles, respectively, of the permanent magnet 250. Accordingly, the permanent magnet 250 is quickly forced to a forward position. When the magnet control ring 221 is moved forwardly, as shown in Figure 13, the north and south poles of the magnet control ring 221 repel the north and south poles, respectively, of the permanent magnet 250. Accordingly, the the permanent magnet 250 is quickly forced to a rearward position. In this manner, as the magnet control ring 221 is moved back and forth between the forward stop ring 231a and a rearward stop ring 231b, the permanent magnet 250 oscillates between its forward position, as shown in Figure 12, and its rearward position, as shown in Figure 13.

Reference will now be made to Figures 14 and 15, which show a second preferred embodiment of the manually rechargeable flashlight of the present invention, as indicated by general reference numeral 320. The manually rechargeable flashlight 320 is similar to the second preferred embodiment manually rechargeable flashlight 220, except that the magnet control ring 321 has several bar magnets 322 mounted therein, so as to provide an increased magnetic force acting on the permanent magnet 350 in the elongate tube 340.

Reference will now be made to Figures 16 and 17, which show a third preferred embodiment of the manually rechargeable flashlight of the present invention, as indicated by general reference numeral 420. The manually rechargeable flashlight 420 is similar to the second preferred embodiment manually rechargeable flashlight 220, except that the magnet control ring 221 has been replaced by an external magnet control member comprising a magnet control ring 421 mounted on the main housing 430 for movement in a transverse direction to the longitudinal axis "L" between a neutral position, as is shown in Figure 16, and a repelling position, as is shown in Figure 17. The magnet control ring 421 comprises at least one bar magnet oriented longitudinally in parallel with the longitudinal axis "L". When the magnet control ring 421 is in its neutral position, the permanent magnet 450 is close to the magnet control ring 421. When the magnet control ring is in its repelling position, the permanent magnet 450 is repelled away from the magnet control ring 421. A spring member 451 is used to return the permanent magnet 450 to its neutral position. A regular up and down motion of the magnet control ring 421 produces an oscillating motion of the permanent magnet 450 between its forward position, as shown in Figure 16, and its rearward position, as shown in Figure 17.

A manually rechargeable flashlight comprises a main housing with an external magnet control member disposed circumferentially around the main housing for free sliding movement along the longitudinal axis "L" between a forward position and a rearward position. The external magnet control member has at least one bar magnet oriented longitudinally in parallel with the longitudinal axis "L". There is at least one light emitting diode. There is also at least one capacitor or rechargeable battery for storing electrical energy and supplying the electrical energy to the at least one light emitting diode. A switch is for turning on and off the least one light emitting diode. An elongate tube is disposed within the main housing. A coil of electrically conductive wire is disposed around the main housing, and electrically connected to the at least one capacitor or rechargeable battery. A permanent magnet is disposed in free-sliding relation in the elongate tube so as to move within the interior of the coil, and is oriented with its north pole in the opposite direction along the longitudinal axis "L" as the has at least one bar magnet in the external magnet control member. When the external magnet control member is moved along the longitudinal axis "L" between the forward position and a rearward position, the permanent magnet is moved along the longitudinal axis "L" generally with the external magnet control member. Alternatively, the permanent magnet is oriented with its north pole in the same direction along the longitudinal axis "L" as the has at least one bar magnet in the external magnet control member, and when the external magnet control member is moved along the longitudinal axis "L" between the forward position and a rearward position, the permanent magnet is moved along the longitudinal axis "L" in an opposite direction to the external magnet control member.

## Claims

1. A manually rechargeable flashlight comprising:
a main housing defining a longitudinal axis "L";
an external magnet control member disposed circumferentially around said main housing for free sliding movement along said longitudinal axis "L" between a forward position and a rearward position;
wherein said external magnet control member has at least one bar magnet oriented longitudinally in parallel with said longitudinal axis "L";
at least one light emitting diode;
storage means for storing electrical energy and supplying said electrical energy to said at least one light emitting diode;
switch means for turning on and off said least one light emitting diode;
an elongate tube disposed within said main housing;
a coil of electrically conductive wire disposed around said main housing, and electrically connected to said storage means; and,
a permanent magnet disposed in free-sliding relation in said elongate tube so as to move within the interior of the coil, and oriented with its north pole in the opposite direction along said longitudinal axis "L" as said has at least one bar magnet in said external magnet control member;
wherein, when said external magnet control member is moved along said longitudinal axis "L" between said forward position and a rearward position, said permanent magnet is moved along said longitudinal axis "L" generally with said external magnet control member.

2. The manually rechargeable flashlight of claim 1, wherein said external magnet control member comprises a magnet control ring.

3. The manually rechargeable flashlight of claim 1, wherein said storage means for storing electrical energy comprises at least one capacitor or at least one rechargeable battery.

4. A manually rechargeable flashlight comprising:
a main housing defining a longitudinal axis "L";
an external magnet control member disposed circumferentially around said main housing for free sliding movement along said longitudinal axis "L" between a forward position and a rearward position;
wherein said external magnet control member has at least one bar magnet oriented longitudinally in parallel with said longitudinal axis "L" with its north pole oriented towards the front ;
at least one light emitting diode;
storage means for storing electrical energy and supplying said electrical energy to said at least one light emitting diode;
switch means for turning on and off said least one light emitting diode;
an elongate tube disposed within said main housing;
a coil of electrically conductive wire disposed around said main housing, and electrically connected to said storage means; and,
a permanent magnet disposed in free-sliding relation in said elongate tube so as to move within the interior of the coil, and oriented with its north pole in the same direction along said longitudinal axis "L" as said has at least one bar magnet in said external magnet control member;
wherein, when said external magnet control member is moved along said longitudinal axis "L" between said forward position and a rearward position, said permanent magnet is moved along said longitudinal axis "L" in an opposite direction to said external magnet control member.

5. The manually rechargeable flashlight of claim 4, wherein said external magnet control member comprises a magnet control ring.

6. The manually rechargeable flashlight of claim 4, wherein said storage means for storing electrical energy comprises at least one capacitor or at least one rechargeable battery.

7. A manually rechargeable flashlight comprising:
a main housing defining a longitudinal axis "L";
an external magnet control member mounted on said main housing for movement between a neutral position and a repelling position;
wherein said external magnet control member comprises at least one bar magnet oriented longitudinally in parallel with said longitudinal axis "L";
at least one light emitting diode;
storage means for storing electrical energy and supplying said electrical energy to said at least one light emitting diode;
switch means for turning on and off said least one light emitting diode;
an elongate tube disposed within said main housing;
a coil of electrically conductive wire disposed around said main housing, and electrically connected to said storage means; and,
a permanent magnet disposed in free-sliding relation in said elongate tube so as to move within the interior of the coil;
wherein, when said external magnet control member is in said neutral position, said permanent magnet is close to said external magnet control member, and when said external magnet control member is in said repelling position, said permanent magnet is repelled away from said external magnet control member.

8. The manually rechargeable flashlight of claim 7, wherein said external magnet control member comprises a magnet control ring.

9. The manually rechargeable flashlight of claim 7, wherein said storage means for storing electrical energy comprises at least one capacitor or at least one rechargeable battery.

## Patentansprüche

1. Manuell wiederaufladbare Taschenlampe, umfassend:
- ein eine Längsachse "L" definierendes Hauptgehäuse;
- ein externes Magnet-Steuerelement, das derart umlaufend am Hauptgehäuse angeordnet ist, dass es entlang der Längsachse "L" frei zwischen einer vorderen und einer hinteren Stellung gleiten kann;
- wobei das externe Magnet-Steuerelement mindestens einen Stabmagneten enthält, der in Längsrichtung parallel zur Längsachse "L" ausgerichtet ist;
- mindestens eine Leuchtdiode;
- eine Speichereinrichtung zum Speichern elektrischer Energie und zur Versorgung der mindestens einen Leuchtdiode mit der elektrischen Energie;
- ein Schaltmittel zum Ein- und Ausschalten der mindestens einen Leuchtdiode;
- ein innerhalb des Hauptgehäuses angeordnetes längliches Rohr;
- eine Spule aus elektrisch leitendem Draht, der um das Hauptgehäuse verläuft und elektrisch mit der Speichereinrichtung verbunden ist; und
- einen Permanentmagneten, der in dem länglichen Rohr derart frei gleitend angeordnet ist, dass er innerhalb der Spule bewegbar ist, und der mit seinem Nordpol entlang der Längsachse "L" entgegengesetzt der Richtung des im externen Magnet-Steuerelement angeordneten, mindestens einen Stabmagnets ausgerichtet ist;
- wobei der Permanentmagnet bei Bewegung des externen Magnet-Steuerelementes entlang der Längsachse "L" zwischen der vorderen Position und einer hinteren Position entlang dieser Längsachse "L" im allgemeinen mit dem externen Magnet-Steuerelement bewegt wird.

2. Manuell wiederaufladbare Taschenlampe nach Anspruch 1, wobei das externe Magnet-Steuerelement einen Magnet-Steuerring umfasst.

3. Manuell wiederaufladbare Taschenlampe nach Anspruch 1, wobei die Speichereinrichtung zum Speichern von elektrischer Energie mindestens einen Kondensator oder mindestens eine wiederaufladbare Batterie umfasst.

4. Manuell wiederaufladbare Taschenlampe, umfassend
- ein eine Längsachse "L" definierendes Hauptgehäuse;
- ein externes Magnet-Steuerelement, das derart umlaufend am Hauptgehäuse angeordnet ist, dass es entlang der Längsachse "L" frei zwischen einer vorderen und einer hinteren Stellung gleiten kann;
- wobei das externe Magnet-Steuerelement mindestens einen Stabmagneten enthält, der in Längsrichtung parallel zur Längsachse "L" so ausgerichtet ist, dass sein Nordpol zur Vorderseite weist;
- mindestens eine Leuchtdiode;
- eine Speichereinrichtung zum Speichern elektrischer Energie und zur Versorgung der mindestens einen Leuchtdiode mit der elektrischen Energie;
- ein Schaltmittel zum Ein- und Ausschalten der mindestens einen Leuchtdiode;
- ein innerhalb des Hauptgehäuses angeordnetes längliches Rohr;
- eine Spule aus elektrisch leitendem Draht, der um das Hauptgehäuse verläuft und elektrisch mit der Speichereinrichtung verbunden ist; und
- einen Permanentmagneten, der in dem länglichen Rohr derart frei gleitend angeordnet ist, dass er innerhalb der Spule bewegbar ist, und der mit seinem Nordpol entlang der Längsachse "L" in die gleiche Richtung wie der im externen Magnet-Steuerelement angeordnete, mindestens eine Stabmagnet ausgerichtet ist;
- wobei der Permanentmagnet bei Bewegung des externen Magnet-Steuerelementes entlang der Längsachse "L" zwischen der vorderen Position und einer hinteren Position entlang dieser Längsachse "L" in einer zum externen Magnet-Steuerelement entgegengesetzten Richtung bewegt wird.

5. Manuell wiederaufladbare Taschenlampe nach Anspruch 4, wobei das externe Magnet-Steuerelement einen Magnet-Steuerring umfasst.

6. Manuell wiederaufladbare Taschenlampe nach Anspruch 4, wobei die Speichereinrichtung zum Speichern von elektrischer Energie mindestens einen Kondensator oder mindestens eine wiederaufladbare Batterie umfasst.

7. Eine manuell wiederaufladbare Taschenlampe, umfassend:
- ein eine Längsachse "L" definierendes Hauptgehäuse;
- ein externes Magnet-Steuerelement, das derart am Hauptgehäuse angeordnet ist, dass es sich zwischen einer neutralen und einer Rückstoß-Stellung bewegen kann;
- wobei das externe Magnet-Steuerelement mindestens einen Stabmagneten enthält, der in Längsrichtung parallel zur Längsachse "L" ausgerichtet ist;
- mindestens eine Leuchtdiode;
- eine Speichereinrichtung zum Speichern elektrischer Energie und zur Versorgung der mindestens einen Leuchtdiode mit der elektrischen Energie;
- ein Schaltmittel zum Ein- und Ausschalten der mindestens einen Leuchtdiode;
- ein innerhalb des Hauptgehäuses angeordnetes längliches Rohr;
- eine Spule aus elektrisch leitendem Draht, der um das Hauptgehäuse verläuft und elektrisch mit der Speichereinrichtung verbunden ist; und
- einen Permanentmagneten, der in dem länglichen Rohr derart frei gleitend angeordnet ist, dass er innerhalb der Spule bewegbar ist;
- wobei der Permanentmagnet, wenn das externe Magnet-Steuerelement in der neutralen Stellung ist, nahe dem externen Magnet-Steuerelement ist, und der Permanentmagnet, wenn das externe Magnet-Steuerelement in der Rückstoß-Stellung ist, vom externen Magnet-Steuerelement weg gestoßen wird.

8. Manuell wiederaufladbare Taschenlampe nach Anspruch 7, wobei das externe Magnet-Steuerelement einen Magnet-Steuerring umfasst.

9. Manuell wiederaufladbare Taschenlampe nach Anspruch 7, wobei die Speichereinrichtung zum Speichern von elektrischer Energie mindestens einen Kondensator oder mindestens eine wiederaufladbare Batterie umfasst.

## Revendications

1. Lampe de poche rechargeable manuellement comprenant :
- un corps principal définissant un axe longitudinal "L";
- une unité de contrôle magnétique externe disposée à la circonférence autour dudit corps principal pour un mouvement de coulissement sans contrainte le long dudit axe longitudinal "L" entre une position avant et une position arrière;
- dans laquelle la dite unité de contrôle magnétique externe a au moins une barre magnétique orientée longitudinalement en parallèle au dit axe longitudinal "L";
- au moins une diode électroluminescente;
- un dispositif de stockage pour stocker l'énergie électrique et pour fournir la dite énergie électrique à la dite, au moins une, diode électroluminescente;
- un interrupteur pour allumer et éteindre la dite, au moins une, diode électroluminescente;
- un tube allongé disposé à l'intérieur dudit corps principal;
- une bobine de fil conducteur électriquement disposé autour dudit corps principal et connecté électriquement au dit dispositif de stockage; et
- un aimant permanent disposé dans le dit tube allongé en pouvant glisser sans contrainte de telle manière qu'il puisse se déplacer dans l'intérieur de la bobine, et orienté avec son pôle nord dans la direction opposée le long dudit axe longitudinal "L" par rapport à celle de la, au moins une, barre magnétique dans la dite unité de contrôle magnétique externe;
- dans laquelle le dit aimant permanent, quand la dite unité de contrôle magnétique externe est déplacée le long dudit axe longitudinal "L" entre la dite position avant et une position arrière, est déplacé le long dudit axe longitudinal "L" généralement avec la dite unité de contrôle magnétique externe.

2. Lampe de poche manuellement rechargeable selon la revendication 1 dans laquelle la dite unité de contrôle magnétique externe comprend un anneau de contrôle magnétique.

3. Lampe de poche manuellement rechargeable selon la revendication 1 dans laquelle le dit dispositif de stockage pour le stockage de l'énergie électrique comprend au moins un condensateur ou au moins une batterie rechargeable.

4. Lampe de poche manuellement rechargeable comprenant:
- un corps principal définissant un axe longitudinal "L";
- une unité de contrôle magnétique externe disposée à la circonférence autour dudit corps principal pour un mouvement de coulissement sans contrainte le long dudit axe longitudinal "L" entre une position avant et une position arrière;
- dans laquelle la dite unité de contrôle magnétique externe a au moins une barre magnétique orientée longitudinalement en parallèle dudit axe longitudinal "L" avec son pôle nord orienté vers l'avant;
- au moins une diode électroluminescente;
- un dispositif de stockage pour stocker l'énergie électrique et fournir la dite énergie électrique à la dite, au moins une, diode électroluminescente;
- un interrupteur pour allumer et éteindre la dite, au moins une, diode électroluminescente;
- un tube allongé disposé à l'intérieur dudit corps principal;
- une bobine de fil conducteur électriquement disposé autour dudit corps principal et connecté électriquement au dit dispositif de stockage; et
- un aimant permanent disposé dans le dit tube allongé en pouvant glisser sans contrainte de telle manière qu'il puisse se déplacer dans l'intérieur de la bobine, et orienté avec son pôle nord dans la même direction le long dudit axe longitudinal "L" par rapport à celle de la, au moins une, barre magnétique dans la dite unité de contrôle magnétique externe;
- dans laquelle le dit aimant permanent, quand la dite unité de contrôle magnétique externe est déplacée le long dudit axe longitudinal "L" entre la dite position avant et une position arrière, est déplacé le long dudit axe longitudinal "L" dans une direction opposée à la dite unité de contrôle magnétique externe.

5. Lampe de poche manuellement rechargeable selon la revendication 4 dans laquelle la dite unité de contrôle magnétique externe comprend un anneau de contrôle magnétique.

6. Lampe de poche manuellement rechargeable selon la revendication 4 dans laquelle le dit dispositif de stockage pour le stockage de l'énergie électrique comprend au moins un condensateur ou au moins une batterie rechargeable.

7. Lampe de poche manuellement rechargeable comprenant:
- un corps principal définissant un axe longitudinal "L"; une unité de contrôle magnétique montée sur le dit corps
principal afin de se déplacer entre une position neutre et une position répulsive;
- dans laquelle la dite unité de contrôle magnétique externe comprend au moins une barre magnétique orientée longitudinalement en parallèle dudit axe longitudinal "L";
- au moins une diode électroluminescente;
- un dispositif de stockage pour stocker l'énergie électrique et pour fournir la dite énergie électrique à la dite, au moins une, diode électroluminescente;
- un interrupteur pour allumer et éteindre la dite, au moins une, diode électroluminescente;
- un tube allongé disposé à l'intérieur dudit corps principal;
- une bobine de fil conducteur électriquement disposé autour dudit corps principal, et connecté électriquement au dit dispositif de stockage; et
- un aimant permanent disposé dans le dit tube allongé en pouvant glisser sans contrainte de telle manière qu'il puisse se déplacer dans l'intérieur de la bobine;
- dans laquelle le dit aimant permanent, quand la dite unité de contrôle magnétique externe est dans la dite position neutre, est proche de la dite unité de contrôle magnétique externe et le dit aimant permanent, quand la dite unité de contrôle externe est dans la dite position répulsive, est repoussé loin de la dite unité de contrôle externe.

8. Lampe de poche manuellement rechargeable selon la revendication 7 dans laquelle la dite unité de contrôle magnétique externe comprend un anneau de contrôle magnétique.

9. Lampe de poche manuellement rechargeable selon la revendication 7 dans laquelle le dit dispositif de stockage pour le stockage de l'énergie électrique comprend au moins un condensateur ou au moins une batterie rechargeable.
